# EUROPEAN PATENT SPECIFICATION

(11) **EP 2 485 575 B1**
(45) Date of publication and mention of the grant of the patent: **31.07.2013**
(21) Application number: 10771819.9
(22) Date of filing: 04.10.2010
(51) Int. Cl.: A01D 69/06, A01D 34/76, A01D 34/82

(54) **Supporting and driving assembly for a blade carrier disc of a rotary multiple-disc mowing machine**
Trage- und Antriebsanorndung für eine Klingenträgerscheibe eines Mehrscheiben-Rotationsmähers
Ensemble de support et d'entraînement pour disque porte-lames d'une faucheuse à disques multiples rotatifs

(30) Priority: 05.10.2009 IT TO20090753
(43) Date of publication of application: 15.08.2012
(73) Proprietor: Gribaldi & Salvia S.p.A., 10086 Rivarolo Canavese (Torino) (IT)
(72) Inventor: SALVIA, Vincenzo, I-10086 Rivarolo Canavese (Torino) (IT); SALVIA, Vito, I-10086 Rivarolo Canavese (Torino) (IT)
(74) Representative: Fioravanti, Corrado
(86) International application number: PCT/IB2010/054468
(87) International publication number: WO 2011/042853

(56) References cited:
- EP-A1- 1 088 476
- DE-A1- 19 525 041
- DE-U1- 20 203 511
- US-A- 4 497 161
- US-A1- 2006 021 316

## Description

The present invention relates to a supporting and driving assembly for a blade carrier disc of a rotary multiple-disc mowing machine. More particularly, the invention relates to a safety coupling system for the blade carrier discs.

Rotary multiple-disc mowing machines having a row of discs each with two or three blades, for example four to eight parallel-axis discs, are known, said discs being rotationally operated by a train of gears hermetically enclosed inside a casing with oil-bath lubrication. The blades, which are two or three in number for each disc, project radially or tangentially from the periphery of the discs. These discs are mounted along a bar or arm, spaced in a direction transverse to the mowing direction, so that the blades are rotatable in a plane generally parallel to the surface of the ground over which the mowing machine moves. The discs thus exert a mowing action along the entire length of the arm. The discs are spaced from each other so as to define free spaces between the periphery of the discs, and the rotation of the discs is synchronised so that the blades which project from each disc do not strike the blades of the adjacent discs while they rotate in the spaces between two adjacent discs.

Following accidental impact with stones, pieces of wood, cement articles, etc., which may be present on the ground, the blades may cause breakage of the transmission gears. In many cases the three transmission gears suffer extensive damage. This results in the need for repair with consequent long machine downtimes and high associated costs.

The safety systems proposed in the past consist in some cases of easy breakage points on the shaft which supports and rotationally drives the blade carrier disc, or easy breakage pins, in order to render the disc rotor idle and prevent damage to the transmission. In these cases also the mowing machine, however, is unusable until the damage parts have been replaced.

US 4 497 161 A discloses a supporting and driving assembly for a blade carrier disc of a multi-disc mowing machine comprising a row of rotary mower discs with parallel axes spaced apart along a supporting arm and driven for rotation by a gear train, the assembly comprising:
- a shaft driven for rotation about an axis which is vertical in use;
- a disc-shaped hub which is connected with the shaft and fixable to the disc;
- mechanical connecting means for transferring rotary movement from the shaft to the blade carrier disc. The mechanical connecting means include a safety clutch with a cover plate depressing balls arranged in holes of the blade carrier disc and fitting in recesses of the disc hub which is connected with the shaft. In the event of heavy resistance, the balls will snap out of the recesses so that the direct rotary joint between the shaft and the blade carrier disc is interrupted.

The object of the present invention is to prevent breakage of the gears following accidental impact and eliminate the drawbacks arising therefrom.

In order to achieve this object, together with other objects and advantages, which will be understood more clearly below, the invention provides a supporting and driving assembly for a blade carrier disc having the features defined in the accompanying claims.

A preferred, but non-limiting embodiment of the invention will now be described with reference to the accompanying drawings in which:
- Figure 1 is an exploded perspective view of a blade carrier disc and the associated rotary supporting and driving assembly;
- Figure 2 is an exploded and partially cross-sectioned perspective view of the assembly according to Figure 1;
- Figure 3 is a view, along a vertical axial section, of the assembly according to Figure 1 assembled in the normal operating condition (the blade carrier disc is not shown);
- Figure 4 is a view similar to that of Figure 3, but shows the assembly in a different operating condition in which the blade carrier disc (not shown) is rotationally disengaged from its supporting and driving shaft.

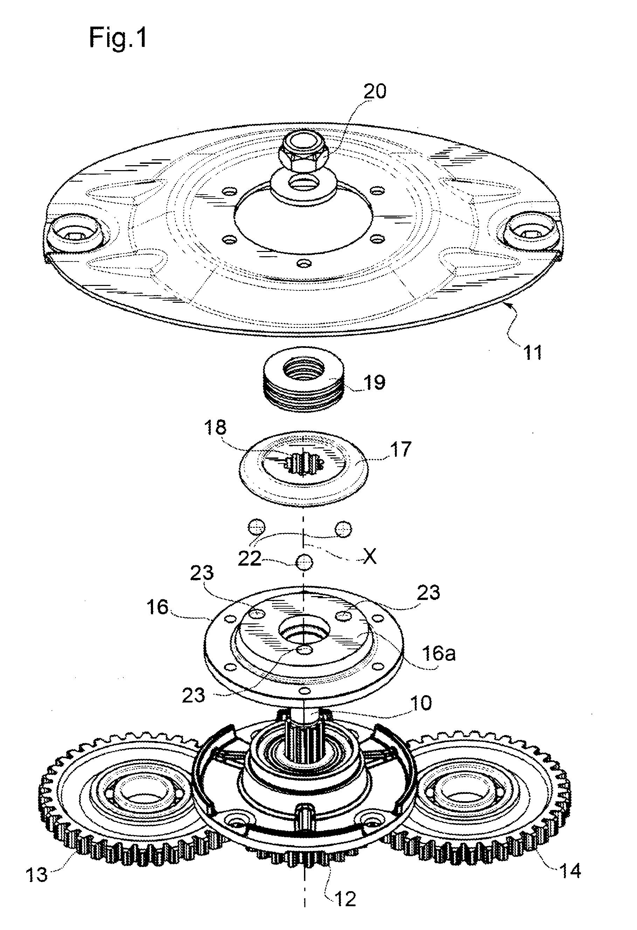

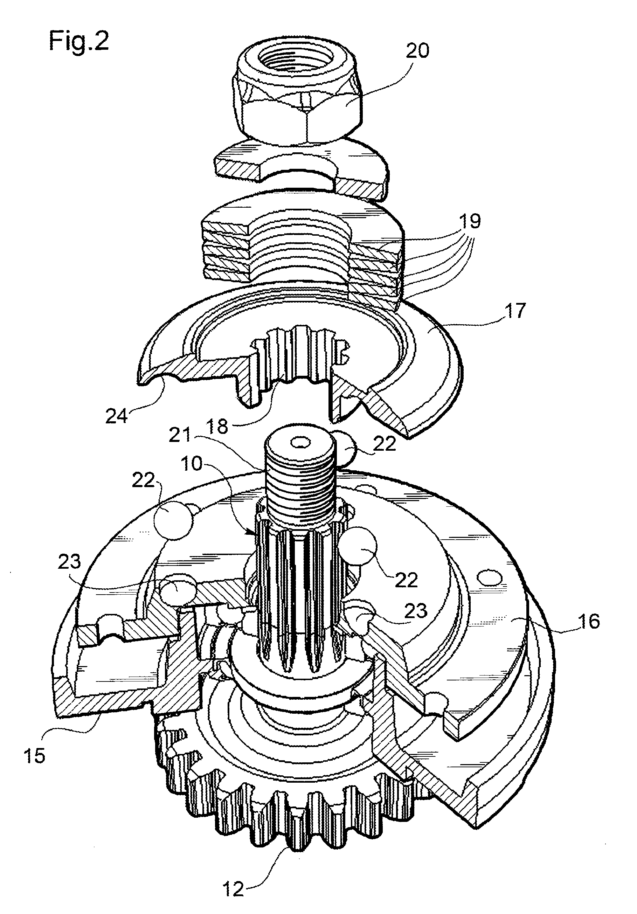

With reference initially to Figures 1 to 3, the number 10 denotes an axially splined drive shaft which is able to support and rotationally drive a blade carrier disc 11 (the blades are not shown in the drawings). The shaft 10 receives the rotary movement about its axis via a gear wheel 12 or pinion which is formed as one piece or in any case fixed to one end of the shaft. The gear wheel 12 meshes with other gear wheels 13, 14 forming part of a gear train which, in a manner known per se, transmits the rotation to all the shafts and therefore to all the discs of the mowing machine.

The general configuration of a rotary multiple disc mowing machine of the type considered here and discussed in the introductory part of the present description is considered to be generally known. Consequently, in the remainder of this description, only the elements of specific importance and interest for the purposes of implementing the present invention will be described in detail. For the design of the parts and elements not shown in detail reference may therefore be made to a mowing machine of the known type.

The shaft 10 is mounted rotatably on a fixed support 15 about an axis x which is vertical during use. Throughout the present description and the claims, the terms and expressions indicating positions and orientation, such as "vertical", are understood as referring to the condition when installed on the mowing machine during use. Thus, terms such as "axial" and "radial" must be interpreted with reference to the axis of rotation x.

The disc 11 is fixed to an annular disc-like hub 16 which is mounted with radial play on the shaft 10. The hub 16 is releasably coupled to a thrust plate 17 which preferably has an annular disc-like form and has an axially splined central opening 18 and is thus mounted slidably on the shaft 10 As a result of the splined coupling, the plate 17 is rotationally driven integrally with the shaft 10. One or more springs 19, in the example here a series of Belleville springs 19, clastically push the plate 17 axially towards the hub 16. The springs 19 are locked at the top by a nut 20 which is screwed onto the threaded top end 21 of the shaft 10.

The hub 16 and the plate 17 are adjacent in the axial direction. A series of balls 22 are provided at the interface between the hub and the plate, being mounted - in this example - on the hub 16 and projecting axially from the upper surface 16a of the hub itself. In the embodiment shown in the drawings, each ball 22 is accommodated inside a spherical seat formed by two complementary recesses 23, 24 which are facing and axially aligned and formed in the hub 16 and in the plate 17, respectively. The recesses 23 formed in the hub are niches shaped as a spherical segment having a spherical surface greater than that of a hemisphere, while the recesses 24 in the plate 17 have the shape of a spherical segment smaller than a hemisphere.

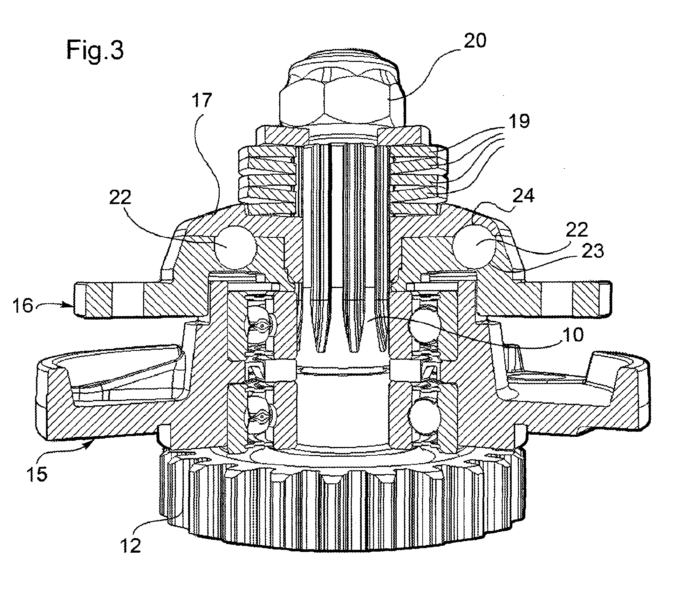

During normal operating conditions, the driving torque imparted by the shaft 10 is transmitted to the plate 17 and from the latter to the hub 16 via the balls 22 which are partially accommodated also inside the recesses 24 and exert against the latter a thrust in the circumferential direction (Figure 3).

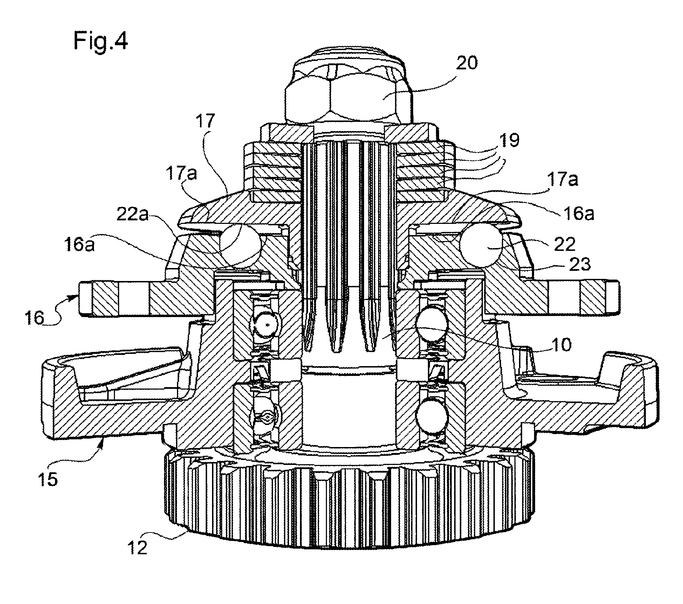

When one of the blades suffers an impact of a certain intensity which tends to stop the disc or slow down considerably its rotation, the hub 16 and the blade carrier disc 11 rotationally disengage from the shaft 10. In fact, owing to the effect of the resistive torque generated by the impact of the blade against an external body such as a rock, the portions of the balls projecting axially from the hub exert a thrust with an axial component against the recesses 24 of the plate 17. When this axial component exceeds the elastic force exerted by the springs 19, the latter compress, the plate 17 is raised and disengages the balls 22 from the recesses 24. In this condition (Figure 4), the hub 16 and the disc 11 are idle with respect to the shaft 10; the bottom surface 17a of the plate rests against the top 22a of the balls and is kept in this contact condition by the springs 19.

It will be appreciated that the rotational disengagement of the blade carrier disc may take place without the breakage of any of the mowing machine components. It can also be appreciated that the blade carrier disc is automatically engaged again with the drive shaft 10. In fact, while the disc 11 and the hub 16 are disengaged, the plate 17 continues to be rotationally driven by the shaft 10; as soon as the recesses 24 pass over the balls 22, the springs extend and move the plate 17 towards the hub again. Engagement of the balls 22 inside the recesses 24 restores the transmission of the rotary movement from the shaft 10 to the blade carrier disc 11.

As shown more clearly in Figure 1, in the preferred embodiment the balls 22 are positioned at different radial distances from the central axis of rotation, and the recesses 24 are distributed in the same configuration as the balls 22. Owing to this identical distribution, there is a single angular position of the hub 16 and the plate 17 in which each ball 22 is axially aligned with the respective recess 24 and therefore may be partially accommodated also inside the recesses 24 so as to receive from the plate 17 the thrust in the circumferential direction. That single angular position is suitably predetermined so that the blades of one disc do not interfere with the blades of the adjacent rotating disc. In other words, the various balls follow different circular trajectories about the axis of rotation and prevent the disc being locked in an angular position different from the predetermined position. The unique coupling system is such that the invention may be equally well applied to discs with two or three blades.

The projecting balls have dimensions and are distributed so as to define, in the disengaged condition described above (Figure 4), a resting plane which keeps the hub oriented perpendicularly with respect to the axis of rotation. It is desirable in fact to prevent the hub from becoming excessively inclined with respect to the axis and therefore from seizing on the shaft during rotational disengagement and therefore remaining jammed on the shaft in an inclined position. Therefore the balls 22 are preferably three or more than three in number, are distributed angularly in a uniform manner around the axis of rotation and all have approximately the same projecting height with respect to the surface 16a so as to define a resting plane perpendicular to the axis of rotation.

The balls 22, once worn, may be replaced with a certain ease. The choice of using balls to form the protrusions 22 is a preferred, but not obligatory choice for the purposes of implementing the invention. In particular, the invention may be implemented by means of protrusions which have a shape different from a spherical shape, for example by means of projecting pins which are fixed or formed as one piece with the hub 16.

In an alternative embodiment, the protrusions may be carried by the plate 17 instead of the hub, in a configuration which is substantially the reverse of the example illustrated here.

According to another possible variant of the invention, the protrusions represented here by the balls 22 may consist of surfaces which are inclined with respect to the axis of rotation, for example three or more sawtooth surfaces, located at the interface between the plate 17 and the hub 16 and oriented so that, as a result of the engagement with respective corresponding surfaces, a movement of relative rotation between hub and plate is converted into a relative separating movement in an axial direction, parallel to or coinciding with that of the axis of rotation x.

It is understood that the invention is not limited to the embodiments described and illustrated here, which are to be regarded as examples of embodiments of the assembly. The invention, however, may be subject to modifications in terms of shape and arrangement of parts, as well as constructional and operational details. For example, the use of several Belleville springs is advantageous because it allows calibration of the threshold value for the resistance torque at which rotational disengagement of the blade carrier disc from the rotating shaft desirably occurs. Other elastic means may be used instead of the springs 19 illustrated here.

## Claims

1. A supporting and driving assembly for a blade carrier disc (11) of a multi-disc mowing machine comprising a row of rotary mower discs with parallel axes spaced apart along a supporting arm and driven for rotation by a gear train, the assembly comprising:
- a shaft (10) driven for rotation about an axis (x) which is vertical in use;
- a hub (16) fixable to the disc (11) and mounted onto the shaft (10);
- mechanical connecting means for transferring rotary movement from the shaft (10) to the hub (16);
wherein the connecting means include:
- a member (17) coupled for rotation with the shaft (10) and axially slidably mounted along the shaft adjacent to the hub (16);
- at least one elastic means (19), mounted on the shaft (10), for axially urging the member (17) towards the hub (16);
- first and second corresponding interface surfaces (23, 24) secured to the hub (16) and the member (17), respectively, the surfaces being inclined with respect to the rotation axis or curved so as to convert a movement of relative rotation between the hub (16) and the member (17) into a relative bringing apart movement in an axial direction parallel to or coinciding with that of the rotation axis (x),
whereby the assembly is capable of reaching two alternative operational conditions:
a first normal working condition, in which the first and second interface surfaces are axially close and mutually engaged for rotation in order to transfer rotary motion from the shaft (10) to the hub (16), and
a second condition, following an impact between one of the blades of the disc (11) and an external body, in which the first interface surfaces are disengaged from the corresponding second interface surfaces, axially spaced apart and angularly offset with respect thereto, whereby the blade carrier disc (11) and the hub (16) are rotationally disengaged from the member (17) and the shaft (10).

2. The assembly of claim 1, **characterized in that** the first and second interface surfaces include a plurality of protrusions (22) carried by one of said hub (16) and member (17), and a corresponding plurality of recesses (24) provided by the other of said hub (16) and member (17).

3. The assembly of claim 2, **characterized by** comprising at least three protrusions (22) and at least three corresponding recesses (24), wherein the protrusions and the recesses are uniformly angularly spaced around the rotation axis (x).

4. The assembly of claim 2 or 3, **characterized in that**
the protrusions (22) are located at radially different distances with respect to the rotation axis (x),
the recesses (24) are located at radially different distances according to an arrangement identical to that of the protrusions (22),
whereby there is defined a single angular position of rotational engagement between the hub (16) and the member (17), and wherein in said position each protrusion (22) is axially aligned with a respective recess (24) and is accommodated therein in order to transfer rotary motion form the member (17) to the hub (16).

5. The assembly of claim 2 or 3 or 4, **characterized in that** the protrusions (22) have all an approximately equal axial height so as to define a resting plane perpendicular to the rotation axis.

6. The assembly of any one of claims 2 to 5, **characterized in that** the protrusions (22) include balls.

7. The assembly of claim 6, **characterized in that** the balls (22) protrude axially from a flat surface (16a) of the hub (16) and that, in the first, normal working condition, the balls (22) are partially accommodated in recesses shaped as spherical segments (24) obtained in a flat surface (17a) of the member (17).

8. The assembly of claim 7, **characterized in that** the balls (22) are locked in recesses (23) of the hub shaped as spherical segments having a spherical surface exceeding that of a hemisphere.

9. The assembly of claim 1, **characterized in that** the member (17) is a disc-like plate having an axially splined central opining (18), the member (17) being slidably mounted on an axially splined portion of the shaft (10).

## Patentansprüche

1. Eine Trage- und Antriebsanordnung für eine Blattträgerscheibe (11) einer Mehrscheiben-Mähmaschine, die eine Reihe von sich drehenden Mäherscheiben mit parallelen Achsen aufweist, die entlang eines Tragearms voneinander beabstandet sind und durch einen Getriebezug zur Drehung angetrieben werden, wobei die Anordnung folgende Merkmale aufweist:
eine Welle (10), die bei Verwendung zur Drehung um eine Achse (x), die vertikal ist, angetrieben wird;
eine Nabe (16), die an der Scheibe (11) fixierbar ist und auf der Welle (10) angebracht ist;
eine mechanische Verbindungseinrichtung zum Übertragen einer Drehbewegung von der Welle (10) auf die Nabe (16);
wobei die Verbindungseinrichtung folgende Merkmale umfasst:
ein Bauteil (17), das zur Drehung mit der Welle (10) gekoppelt ist und axial gleitfähig entlang der Welle benachbart zu der Nabe (16) angebracht ist;
zumindest eine elastische Einrichtung (19), die an der Welle (10) angebracht ist, zum axialen Treiben des Bauteils (17) in Richtung der Nabe (16);
erste und zweite entsprechende Grenzflächenoberflächen (23, 24), die an der Nabe (16) bzw. dem Bauteil (17) befestigt sind, wobei die Oberflächen in Bezug auf die Rotationsachse geneigt oder gekrümmt sind, um so eine Bewegung einer relativen Drehung zwischen der Nabe (16) und dem Bauteil (17) in eine relative Auseinanderbringbewegung in einer Axialrichtung parallel zu der Rotationsachse (x) oder mit derselben zusammenfallend umzuwandeln,
wodurch die Anordnung in der Lage ist, zwei alternative Betriebszustände zu erreichen:
einen ersten normalen Betriebszustand, in dem die ersten und die zweiten Grenzflächenoberfläche axial nahe und zur Drehung gegenseitig in Eingriff gebracht sind, um eine Drehbewegung von der Welle (10) auf die Nabe (16) zu übertragen, und
einen zweiten Zustand, der einem Aufeinandertreffen zwischen einem der Blätter der Scheibe (11) und einem externen Körper folgt, in dem die ersten Grenzflächenoberflächen außer Eingriff von den entsprechenden zweiten Grenzflächenoberflächen gebracht sind, in Bezug auf dieselben axial voneinander beabstandet und winkelmäßig versetzt sind, wodurch die Blattträgerscheibe (11) und die Nabe (16) rotationsmäßig außer Eingriff von dem Bauteil (17) und der Welle (10) gebracht sind.

2. Die Anordnung gemäß Anspruch 1, **dadurch gekennzeichnet, dass** die ersten und die zweiten Grenzflächenoberflächen eine Mehrzahl von Vorsprüngen (22), die durch entweder die Nabe (16) oder das Bauteil (17) getragen werden, und eine entsprechende Mehrzahl von Ausnehmungen (24), die durch das jeweils andere Element der Nabe (16) und des Bauteils (17) bereitgestellt werden, umfassen.

3. Die Anordnung gemäß Anspruch 2, **dadurch gekennzeichnet, dass** sie zumindest drei Vorsprünge (22) und zumindest drei entsprechende Ausnehmungen (24) aufweist, wobei die Vorsprünge und die Ausnehmungen gleichmäßig winkelmäßig um die Rotationsachse (x) beabstandet sind.

4. Die Anordnung gemäß Anspruch 2 oder 3, **dadurch gekennzeichnet, dass**
die Vorsprünge (22) in radial unterschiedlichen Entfernungen in Bezug auf die Rotationsachse (x) angeordnet sind,
die Ausnehmungen (24) gemäß einer Anordnung, die identisch zu derjenigen der Vorsprünge (22) ist, in radial unterschiedlichen Entfernungen angeordnet sind,
wodurch eine einzige Winkelposition einer Rotationsineingriffnahme zwischen der Nabe (16) und dem Bauteil (17) definiert wird, und wobei in dieser Position jeder Vorsprung (22) axial mit einer jeweiligen Ausnehmung (24) ausgerichtet ist und in derselben untergebracht ist, um eine Drehbewegung von dem Bauteil (17) auf die Nabe (16) zu übertragen.

5. Die Anordnung gemäß Anspruch 2 oder 3 oder 4, **dadurch gekennzeichnet, dass** die Vorsprünge (22) alle eine in etwa gleiche Axialhöhe aufweisen, um so eine Auflageebene zu definieren, die senkrecht zu der Rotationsachse ist.

6. Die Anordnung gemäß einem der Ansprüche 2 bis 5, **dadurch gekennzeichnet, dass** die Vorsprünge (22) Kugeln umfassen.

7. Die Anordnung gemäß Anspruch 6, **dadurch gekennzeichnet, dass** die Kugeln (22) axial von einer flachen Oberfläche (16a) der Nabe (16) vorstehen, und dadurch, dass in dem ersten normalen Betriebszustand die Kugeln (22) teilweise in Ausnehmungen untergebracht sind, die als Kugelsegmente (24) geformt sind, die in einer flachen Oberfläche (17a) des Bauteils (17) erhalten werden.

8. Die Anordnung gemäß Anspruch 7, **dadurch gekennzeichnet, dass** die Kugeln (22) in Ausnehmungen (23) der Nabe gesperrt sind, die als Kugelsegmente mit einer kugelförmigen Oberfläche geformt sind, die diejenige einer Halbkugel übersteigt.

9. Die Anordnung gemäß Anspruch 1, **dadurch gekennzeichnet, dass** das Bauteil (17) eine scheibenartige Platte mit einer axial kerbverzahnten Mittelöffnung (18) ist, wobei das Bauteil (17) gleitfähig an einem axial kerbverzahnten Abschnitt der Welle (10) angebracht ist.

## Revendications

1. Ensemble de support et de transmission pour disque porte-lame (11) d'une machine de fauchage multidisque comprenant une rangée de disques de fauchage rotatifs ayant des axes parallèles espacés le long d'un bras de support et entraînés en rotation par un train d'engrenages, l'ensemble comprenant :
- un arbre (10) entraîné en rotation autour d'un axe (x) qui est vertical en utilisation ;
- un moyeu (16) pouvant être fixé au disque (11) et qui est monté sur l'arbre (10) ;
- un moyen de connexion mécanique pour transférer un mouvement de rotation de l'arbre (10) au moyeu (16) ;
dans lequel le moyen de connexion comprend :
- un élément (17) accouplé en rotation avec l'arbre (10) et monté de façon glissante axialement le long de l'arbre au voisinage du moyeu (16) ;
- au moins un moyen élastique (19), monté sur l'arbre (10), pour pousser axialement l'élément (17) vers le moyeu (16) ;
- des première et deuxième surfaces d'interface correspondantes (23, 24) fixées respectivement au moyeu (16) et à l'élément (17), ces surfaces étant inclinées par rapport à l'axe de rotation ou courbées afin de convertir un mouvement de rotation relative entre le moyeu (16) et l'élément (17) en un mouvement de séparation relative dans une direction axiale parallèle à ou coïncidant avec celle de l'axe de rotation (x),
moyennant quoi l'ensemble est capable d'atteindre deux variantes d'états fonctionnels :
un premier état de travail normal, dans lequel les première et deuxième surfaces d'interface sont axialement proches et mutuellement en prise en rotation afin de transférer un mouvement de rotation de l'arbre (10) au moyeu (16), et
un deuxième état, suivant un choc entre l'une des lames du disque (11) et un corps extérieur, dans lequel les premières surfaces d'interface sont dégagées des deuxièmes surfaces d'interface correspondantes, axialement espacées et décalées angulairement par rapport à celles-ci, moyennant quoi le disque porte-lame (11) et le moyeu (16) sont dégagés en rotation de l'élément (17) et de l'arbre (10).

2. Ensemble selon la revendication 1, **caractérisé en ce que** les première et deuxième surfaces d'interface comprennent une pluralité de protubérances (22) portées par un objet parmi ledit moyeu (16) et ledit élément (17), et une pluralité correspondante d'évidements (24) fournie par l'autre objet parmi ledit moyeu (16) et ledit élément (17).

3. Ensemble selon la revendication 2, **caractérisé en ce qu'**il comprend au moins trois protubérances (22) et au moins trois évidements correspondants (24), dans lequel les protubérances et les évidements sont régulièrement espacés angulairement autour de l'axe de rotation (x).

4. Ensemble selon la revendication 2 ou 3, **caractérisé en ce que** :
les protubérances (22) sont situées à des distances radialement différentes par rapport à l'axe de rotation (x),
les évidements (24) sont situés à des distances radialement différentes selon un agencement identique à celui des protubérances (22),
moyennant quoi il est défini une seule position angulaire de mise en prise en rotation entre le moyeu (16) et l'élément (17), et dans lequel dans ladite position, chaque protubérance (22) est alignée axialement avec un évidement respectif (24) et y est logée afin de transférer le mouvement de rotation de l'élément (17) au moyeu (16).

5. Ensemble selon la revendication 2, 3 ou 4, **caractérisé en ce que** les protubérances (22) ont toutes une hauteur axiale à peu près égales de manière à définir un plan d'appui perpendiculaire à l'axe de rotation.

6. Ensemble selon l'une quelconque des revendications 2 à 5, **caractérisé en ce que** les protubérances (22) comprennent des billes.

7. Ensemble selon la revendication 6, **caractérisé en ce que** les billes (22) font saillie axialement depuis une surface plate (16a) du moyeu (16) et **en ce que**, dans le premier état de travail normal, les billes (22) sont partiellement logées dans des évidements ayant la forme de segments sphériques (24) obtenus dans une surface plate (17a) de l'élément (17).

8. Ensemble selon la revendication 7, **caractérisé en ce que** les billes (22) sont bloquées dans des évidements (23) du moyeu ayant la forme de segments sphériques présentant une surface sphérique qui dépasse celle d'une pièce hémisphérique.

9. Ensemble selon la revendication 1, **caractérisé en ce que** l'élément (17) est une plaque en forme de disque comportant une ouverture centrale cannelée axialement (18), l'élément (17) étant monté de façon glissante sur une partie cannelée axialement de l'arbre (10).
